# NEUE EUROPÄISCHE PATENTSCHRIFT

(11) **EP 1 642 118 B2**
(45) Veröffentlichungstag und Bekanntmachung des Hinweises auf die Entscheidung über den Einspruch: **20.08.2014**
(45) Hinweis auf die Patenterteilung: 02.12.2009
(21) Anmeldenummer: 04737133.1
(22) Anmeldetag: 23.06.2004
(51) Int. Cl.: G01N 27/90

(54) **SONDE FÜR ELEKTRISCHE MESSVERFAHREN, INSBESONDERE FÜR WIRBELSTROMMESSUNGEN**
METHOD FOR PRODUCING AN EDDY CURRENT PROBE
PROCEDE DE FABRICATION D'UNE SONDE DE COURANT DE FOUCAULT

(30) Priorität: 09.07.2003 EP 03015494
(43) Veröffentlichungstag der Anmeldung: 05.04.2006
(60) Teilanmeldung: 09009514.2
(73) Patentinhaber: Siemens Aktiengesellschaft, 80333 München (DE)
(72) Erfinder: BÄR, Ludwig, 91056 Erlangen (DE); HEINRICH, Werner, 16727 Bärenklau (DE)
(86) Internationale Anmeldenummer: PCT/EP2004/006792
(87) Internationale Veröffentlichungsnummer: WO 2005/005976

(56) Entgegenhaltungen:
- EP-A1- 1 329 730
- WO-A-03/060530
- WO-A1-99/23484
- DE-A1- 19 748 556
- US-A- 5 315 234
- US-A- 5 389 876
- PATENT ABSTRACTS OF JAPAN Bd. 1998, Nr. 12, 31. Oktober 1998 (1998-10-31) & JP 10 197492 A (TOSHIBA CORP), 31. Juli 1998 (1998-07-31)
- Bär et al.: "Rationelle Wirbelstromprüfung mit Sondern von großer Wirkbreite: Vielseitigkeit gezeigt anhand der Prüfung von Turbinenschaufeln",Berichtsband DGZfP-Jahrestagung 2002, November 2002 (2002-11), XP055094738, ISBN: 3-931381-39-0

## Beschreibung

Die Erfindung betrifft ein Verfahren zur Herstellung einer Sonde für elektrische Messverfahren.

Aus der DE 197 48 556 A1 ist eine Sonde für eine Wirbelstrommessung mit einer ferromagnetischen Signalverstärkung bekannt, wobei die Signalverstärkung durch einen starren ferritischen Kern erzeugt wird. Mit einer aus einem starren Substrat, auf dem planare Spulen aufgebracht sind, gebildeten Sonde können nur Prüfkörper mit ebener Oberfläche vermessen werden. Bei unebenen Oberflächen muss die Sonde in ihrer Form einer Oberfläche des Prüfkörpers angepasst sein, anderenfalls ergeben sich falsche Messwerte.

Eine Sonde mit Wirbelstrommessung mit ferromagnetischer Signalverstärkung für ebene Prüfkörper ist auch aus der US-PS 6,002,251 bekannt.

Aus der US-PS 5,389,876 ist eine flexible Sonde für eine Wirbelstrommessung bekannt, die eine Hinterfütterung mit ferritischem Material hat. Eine Wirbelstromsonde mit einer elastischen Hinterfütterung, die ebenfalls ferritisches Material enthält, wird in der US-PS 5,315,234 beschrieben.

Aufgabe der Erfindung ist es daher, ein Verfahren zur Herstellung einer Sonde für elektrische Messverfahren aufzuzeigen, die für verschieden gekrümmte Oberflächen eines Prüfkörpers verwendet werden kann.

Die Aufgabe wird durch ein Verfahren gemäß Anspruch 1 gelöst.

Weitere vorteilhafte Ausgestaltungen der erfindungsgemäßen Sonde sind in den Unteransprüchen erwähnt.

Die Sonde kann sich Krümmungsradien von z.B. 50mm oder größer anpassen.

Die Flexibilität wird dadurch erreicht, dass ein durch eine flexible Folie gebildetes Substrat, für die Sonde vorteilhafterweise Polyimid, verwendet wird.

Auf der flexiblen Folie sind zwei planare Spulen, insbesondere aus Kupfer, als elektrische Bauelemente, aufgebracht.

Die Flexibilität der Sonde bleibt auch durch eine dauerelastische Hinterfütterung der elektrischen Bauelemente erhalten.

Eine Vergussmasse mit Ferritteilchen, wobei die Vergussmasse dauerelastisch verformbar ist, wird hier verwendet.

Ausführungsbeispiele der Erfindung sind in den Zeichnungen vereinfacht und schematisch dargestellt.

Es zeigen:
Figur 1 eine Anordnung von Erreger und Signalspule,
Figur 2 ein erstes Ausführungsbeispiel einer erfindungsgemäßen Sonde, und
Figur 3 ein weiteres Ausführungsbeispiel einer erfindungsgemäß ausgebildeten Sonde.

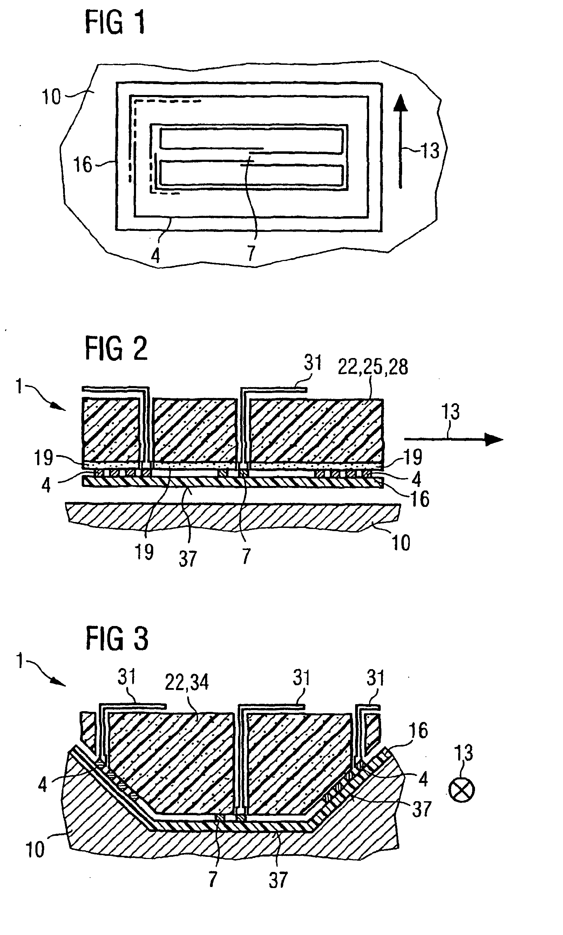

Figur 1 zeigt eine Erregerspule 4 und eine Signalspule 7 als elektrische Bauelemente in ihrer Anordnung in einer Ebene nach dem Stand der Technik.
Die Signalspule 7 ist bspw. von der Erregerspule 4 umgeben. Bezüglich des weiteren beispielhaften Aufbaus von Erregerspule 4, Signalspule 7 und eines Auswertungssystems mit einer Sonde wird auf die DE 197 48 556 A1 verwiesen.

Die Erreger- und Signalspule 4, 7 sind elektrisch voneinander getrennt. Die Signalspule 7 ist in diesem Beispiel als Differenzsonde ausgelegt. Die Ortsauflösung wird bestimmt durch den Abstand der Schwerpunkte der beiden Teilspulen, der sogenannten Baseline.
Die Erregerwicklung 4 umschließt die Teilspulen der Signalspule 7 bspw. symmetrisch, so dass eine Kompensation des Erregerfeldes gewährleistet ist. Somit liegen die Erregerwicklung 4 und die Signalspule 7 in einer Ebene bzw. auf ein und derselben Oberfläche des Substrats 16. Ausführungsbeispiele für Sonden sind:
Eine XXL-Sonde hat eine Baseline von 3,3mm, eine Erregerspule mit 21 Windungen und eine Signalspule mit 8 Windungen. Eine S-Sonde hat eine Baseline mit 2,3mm, eine Erregerspule mit 9 Windungen und eine Signalspule mit 5 Windungen.

Eine Sonde, die unter anderem aus der Erregerspule 4 und Signalspule 7 besteht, wird in einer Scanrichtung 13, gekennzeichnet durch einen Pfeil, über eine Oberfläche eines Prüfkörpers 10 bewegt (durch gestrichelte Umfangslinie angedeutet), wobei die Sonde 1 auf dem Prüfkörper 10 mit einer Auflagefläche 37 (Fig. 2) zur Auflage kommt. Der Prüfkörper 10 enthält beispielsweise Defekte in Form von Rissen, die ein magnetisches Signal der Erregerspule 4 beeinflussen, wodurch die Defekte im Inneren des Prüfkörpers 10 und an dessen Oberfläche festgestellt werden können.

Figur 2 zeigt ein erstes Ausführungsbeispiel für eine Sonde 1 für elektrische Messverfahren gemäß vorliegender Erfindung. Als Substrat 16, das direkt auf dem Prüfkörper aufliegt, wird bspw. eine Folie verwendet, die flexibel und bspw. auch elastisch, insbesondere dauerelastisch ist. Vorzugsweise wird eine Polyimidfolie verwendet.

Dauerelastizität bedeutet, dass die mechanische Elastizität zumindest über die Lebensdauer der Sonde 1 erhalten bleibt. Auf dem Substrat 16 sind die Erregerspule 4 und die Signalspule 7 bspw. planar angeordnet, d.h. die Spule besteht nur aus einer Leiterbahn, die nur in einer Ebene verläuft. Die Spulen 4, 7 als elektrische Bauelemente können mittels eines Galvanikprozesses oder eines nasschemischen Verfahrens auf die Folie 16 aufgebracht werden.
Auf dem Substrat 16 und auf bzw. um die Spulen 4, 7 ist beispielsweise, aber nicht notwendigerweise ein Kleber 19 aufgebracht, der eine Hinterfütterung 22 mit dem Substrat 16 verbindet.

Die Hinterfütterung 22 ist dauerelastisch ausgeführt.
Als Material für die Hinterfütterung 22 wird ein ferritisches Material zur Signalverstärkung verwendet bspw. mit einer Permeabilität µ bis 100. Durch die Hinterfütterung 22 hindurch führt bspw. zumindest eine elektrische Zuleitung 31 für die Spulen 4, 7 für ein Messsystem gemäss DE 197 48 556 A1.

Als Hinterfütterung 22 wird eine mit Ferritpartikeln befüllte dauerelastische Vergussmasse verwendet.

Dieser Schichtstapel aus Substrat 16 und Hinterfütterung 22 bleibt hinreichend flexibel, so dass sich der Schichtstapel verschiedenen Krümmungsradien des Prüfkörpers 10 von z.B. 50mm oder mehr problemlos anpassen lässt.

Figur 3 zeigt ein weiteres Ausführungsbeispiel einer erfindungsgemäß ausgebildeten planaren Sonde 1.
Die Hinterfütterung 22 ist durch ein Vergussmaterial 34 gewährleistet, in dem Ferritpulver vermischt ist. Der mittlere Durchmesser der Ferritpartikel beträgt z.B. ca. 10µm. Die Vergussmasse ist und bleibt nach einem Aushärtungsprozess dauerelastisch verformbar, so dass eine Flexibilität der Sonde 1 dauerhaft gewährleistet ist.

Die Sonde 1 ist so groß gestaltet, dass sie den gesamten zu überprüfenden Bereich des Prüfkörpers 10, beispielsweise eine Mulde, wie in Figur 3 beispielsweise dargestellt ist, abdeckt, so dass der zu überprüfende Bereich in einem Scan, also durch einmaliges Verfahren der Sonde 1 überprüft wird.

Solche Mulden treten beispielsweise bei tannbaumförmig ausgestalteten Schaufelfüßen einer Turbinenschaufel auf.

Als elektrisches Messverfahren kann die Sonde 1, die zwei Spulen 4, 7 oder nur eine Spule sowie eine ferromagnetische Signalverstärkung 22 aufweist, zur Wirbelstrommessung genutzt werden, das beispielsweise dazu dient Defekte an metallischen Bauteilen 10 zu detektieren.

## Patentansprüche

1. Verfahren zur Herstellung einer Wirbelstromsonde (1) für elektrische Messverfahren, mit folgenden Schritten:
Bereitstellung einer flexiblen Folie als Substrat (16), die zur Auflage auf einen Prüfkörper (10) kommt, so dass die Sonde (1) mit der Folie (16) sich verschiedenen Krümmungsradien des Prüfkörpers (10) anpassen kann,
Aufbringen von zwei elektrischen Bauelementen (4,7) auf die Folie (16),
wobei die Sonde (1) nur eine Erregerwicklung (4) als erstes elektrisches Bauelement und nur eine Signalspule (7) oder eine Differenzspule (7), aufweisend zwei Teilspulen, als zweites elektrisches Bauelement umfasst,
wobei die Signalspule (7) und die Erregerspule (4) in einer Ebene oder auf ein und derselben Oberfläche der Folie (16) aufgebracht werden,
wobei die Erregerwicklung (4) so aufgebracht wird, dass sie (4) die Signalspule (7) oder die Differenzspule (7), aufweisend zwei Teilspulen, umschließt und
Aufbringen einer elastischen Hinterfütterung (22) mit ferritischem Material auf die zwei elektrischen Bauelemente (4, 7) auf der Folie (16),
wobei die Hinterfütterung (22) durch eine dauerelastische Vergussmasse (34),
die mit Ferritteilchen gefüllt ist,
gebildet ist.

2. Verfahren nach Anspruch 1,
**dadurch gekennzeichnet, dass**
mit der Sonde (12) der gesamte zu überprüfende Bereich abgedeckt wird.

## Claims

1. Method for producing an eddy current probe (1) for electrical measuring processes, with the following steps:
provision of a flexible film as a substrate (16), which comes to lie on a test piece (10), so that the probe (1) with the film (16) can adapt itself to different radii of curvature of the test piece (10),
mounting of two electrical components (4, 7) on the film (16),
the probe (1) comprising only one exciter winding (4) as the first electrical component and only one signal coil (7) or one differential coil (7), having two coil sections, as the second electrical component,
the signal coil (7) and the exciter coil (4) being applied in one plane or to one and the same surface of the film (16),
the exciter winding (4) being applied in such a way that it (4) encloses the signal coil (7) or the differential coil (7), having two coil sections, and
application of an elastic backing (22) with ferritic material to the two electrical components (4, 7) on the foil (16),
the backing (22) being formed by a permanently elastic casting compound (34), which is filled with ferrite particles.

2. Method according to Claim 1, **characterized in that** the entire region to be examined is covered by the probe (12).

## Revendications

1. Procédé de fabrication d'une sonde (1) de courants de Foucault pour des procédés de mesure électrique, ayant les stades suivants :
on se procure une feuille souple comme substrat ( 16 ) qui vient s'appliquer à une éprouvette ( 10 ) de sorte que la sonde ( 1 ) ayant la feuille ( 16 ) puisse s'adapter à des rayons de courbure différents de l'éprouvette ( 10 ),
on dépose deux composants ( 4, 7 ) électriques sur la feuille ( 16 ),
la sonde ( 1 ) ne comprenant qu'un enroulement ( 4 ) d'excitation comme premier composant électronique et qu'une bobine ( 7 ) de signal ou qu'une bobine ( 7 ) de différence, ayant deux sous-bobines, comme deuxième composant électronique,
dans lequel la bobine ( 7 ) de signal et la bobine ( 7 ) d'excitation sont mises dans un plan ou sur une seule et même surface de la feuille ( 16 ),
dans lequel l'enroulement ( 4 ) d'excitation est mis de manière à ce qu'il ( 4 ) entoure la bobine ( 7 ) de signal ou la bobine ( 7 ) de différence, ayant deux sous-bobines, et
on dépose un coussinet ( 22 ) arrière élastique ayant du matériau ferritique sur les deux composants ( 4, 7 ) électriques sur la feuille ( 16 ),
le coussinet ( 22 ) arrière étant formé par une composition ( 34 ) de scellement élastique, à élasticité permanente, garnie de particules de ferrite.

2. Procédé suivant la revendication 1,
**caractérisé en ce que**
on recouvre par la sonde ( 12 ) toute la partie à contrôler.
